# FASCICULE DE BREVET EUROPEEN

(11) **EP 1 028 092 B1**
(45) Date de publication et mention de la délivrance du brevet: **22.09.2004**
(21) Numéro de dépôt: 00400315.8
(22) Date de dépôt: 04.02.2000
(51) Int. Cl.: C02F 3/30

(54) **Procédé de traitement d'effluents fonctionnant par alimentation alternée et aération syncopée**
Verfahren zur Behandlung von Abwässern durch wechselnde Zufuhr und rythmische Belüftung
Process for treating effluents by alternated supply and rythmical aeration

(30) Priorité: 11.02.1999 FR 9901624
(43) Date de publication de la demande: 16.08.2000
(73) Titulaire: DEMATHIEU ET BARD, F-55100 Verdun (FR)
(72) Inventeur: Bard, Philippe, 57070 Metz (FR); Michelet, Jean, 57155 Marly (FR)
(74) Mandataire: Fruchard, Guy

(56) Documents cités:
- EP-A- 0 071 960
- EP-A- 0 363 718
- WO-A-96/02468
- DE-A- 3 215 404
- GB-A- 2 198 123
- US-A- 4 948 510

## Description

La présente invention concerne un procédé de traitement d'effluents utilisable notamment dans une station d'épuration des eaux usées.

Dans les stations d'épuration de type connu, les effluents sont d'abord soumis à un prétraitement consistant à éliminer les objets flottants, les particules en suspension décantables et partiellement les hydrocarbures et les graisses.

Il est ensuite effectué un traitement biologique des effluents afin d'éliminer le carbone contenu dans les effluents et traiter l'azote et le phosphore.

Le principe du traitement consiste à mettre en contact une flore épuratrice avec les effluents. Une installation de traitement de conception classique en nitrification et dénitrification comprend un premier bassin fonctionnant en anoxie relié à un second bassin fonctionnant en aérobie lui-même relié à un décanteur. Le procédé de traitement mis en oeuvre dans une telle installation consiste à alimenter le premier bassin avec les effluents à traiter. Les bactéries des boues activées contenues dans ce bassin métabolisent le carbone contenu dans les effluents en consommant l'oxygène. Le premier bassin étant en anoxie, les bactéries consomment l'oxygène des nitrates des boues activées, ce qui permet la libération de l'azote des nitrates sous forme gazeuse. Les effluents sont ensuite transférés dans le deuxième bassin qui est sous aération. L'azote ammoniacal contenu dans ces effluents se transforme en nitrate par l'intermédiaire d'une flore bactérienne spécialisée demandant un apport d'oxygène. Les effluents ainsi traités sont ensuite dirigés vers un décanteur où les boues activées en suspension sont séparées de l'eau traitée.

Pour assurer le fonctionnement d'une telle installation, il est nécessaire de faire circuler par recyclage une partie du contenu du deuxième bassin appelée liqueur mixte et les boues décantées vers le premier bassin. Le transfert de la liqueur mixte doit être réalisé à grand débit, ce qui engendre une consommation énergétique importante. En outre, avec de telles installations, il est nécessaire pour réaliser un traitement efficace et pour un débit d'effluents à traiter donné d'avoir un temps de séjour relativement long des effluents dans chaque bassin et donc d'utiliser des bassins de grands volumes.

Pour tenter d'améliorer le rendement on a proposé d'inverser de façon intermittente les fonctions des cuves d'anoxie et de décantation. A chaque alternance il est toutefois nécessaire d'arrêter l'installation pour permettre une décantation de la cuve venant de fonctionner en anoxie.

On connaît également du document EP-A-363 718 un procédé consistant à assurer une permutation circulaire sur une zone en anoxie et deux zones en aérobie, la dernière zone en aérobie étant reliée au décanteur et devenant la zone en anoxie lors du cycle suivant. Ce procédé est intéressant car il permet une spécialisation des micro-organismes dans chacune des zones de traitement et un contrôle du temps pendant lequel les boues activées restent immobilisées dans la zone de décantation. En outre la zone qui est amenée à fonctionner en anoxie est celle contenant le plus de nitrates de sorte que l'absorption du carbone par les bactéries est favorisé. Toutefois pour permettre un passage de chacune des zones en aérobie il est nécessaire de les équiper toutes d'un dispositif d'injection de gaz et de prévoir des dispositifs de commande correspondants de sorte que la gestion de l'installation est complexe.

Un but de l'invention est de profiter des avantages des procédés existants tout en simplifiant le fonctionnement de l'installation.

En vue de la réalisation de ce but, on prévoit selon l'invention, un procédé de traitement d'effluents par brassage avec des boues activées, au moyen d'une installation comprenant trois zones de traitement, une zone recevant les effluents à traiter et commandée pour fonctionner en anoxie, une zone reliée à la zone en anoxie et commandée pour fonctionner en première zone aérobie, et une zone reliée à la première zone aérobie et à un décanteur et commandée pour fonctionner en seconde zone en aérobie, le procédé comprenant les étapes d'alimenter séquentiellement une zone de traitement avec des effluents à traiter et des boues activées, la zone recevant les effluents étant commandée pour fonctionner en anoxie, l'alimentation séquentielle étant réalisée de manière que la zone préalablement en anoxie devienne la seconde zone en aérobie tandis que la première zone en aérobie reste commandée pour fonctionner en première zone en aérobie.

Ainsi, la gestion des zones de traitement est effectuée par une simple inversion de la zone en anoxie et de la seconde zone en aérobie. Des modes de réalisation préférés sont définis dans les revendications 2 - 5.

D'autres caractéristiques et avantages de l'invention ressortiront à la lecture de la description qui suit de modes de mise en oeuvre particuliers non limitatifs de l'invention.

Il sera fait référence aux dessins annexés, parmi lesquels :
- la figure 1 est une vue schématique de dessus d'une installation pour la mise en oeuvre du procédé selon l'invention,
- la figure 2 est une vue partielle en perspective de l'installation de traitement,
- la figure 3 est une vue partielle en coupe d'un compartiment de traitement de l'installation,
- la figure 4 est une vue en coupe d'une vanne,
- la figure 5 a et b est une représentation schématique de la mise en oeuvre du procédé selon l'invention.

Le procédé conforme à l'invention est destiné au traitement d'effluents, tels que des eaux usées, visant à éliminer l'azote, le carbone et le phosphore contenus dans ces effluents. Le traitement est réalisé par brassage des effluents avec des boues activées puis décantation pour séparer les effluents traités des boues activées.

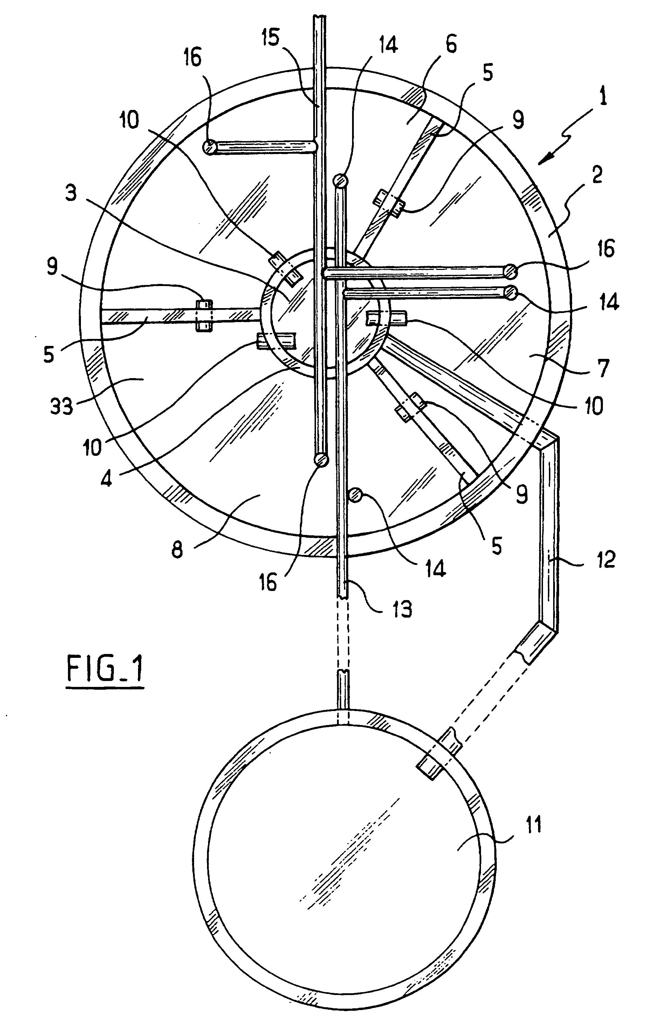

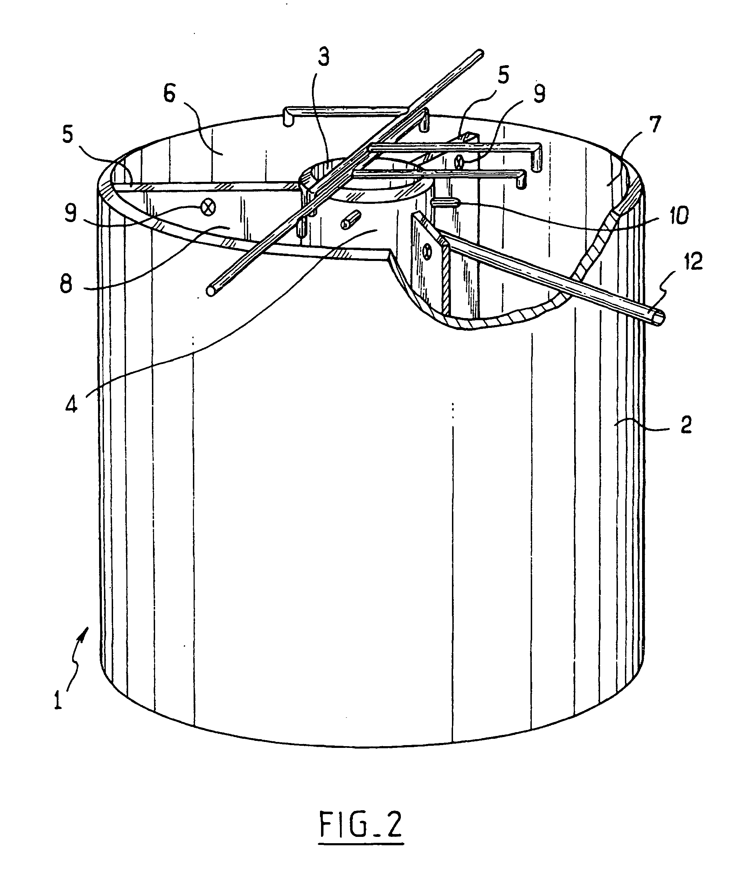

En référence aux figures 1 à 3, l'installation comprend une cuve, généralement désignée en 1, délimitée par une paroi cylindrique 2 et un fond 33, et au centre de laquelle s'étend un dégazeur 3 délimité par une paroi cylindrique 4 coaxiale à la paroi 2.

Trois parois 5 s'étendent radialement entre les parois 2 et 4 pour délimiter trois compartiments adjacents 6, 7, 8. Les compartiments 6, 7 et 8 sont reliés les uns aux autres par des vannes 9 montées sur les parois 5 et au dégazeur 3 par des vannes 10 montées sur la paroi 4 pour déboucher dans chaque compartiment.

Les parois 2, 4, 5 et le fond 33 sont ici réalisés en métal vitrifié et sont assemblés par boulonnage. Les zones de raccord entre les différentes parois sont étanchéifiées par mise en place d'une pâte d'étanchéité. La cuve 1 pourrait également être réalisée à partir d'éléments préfabriqués en béton ou d'autres types de matériaux existant sur le marché.

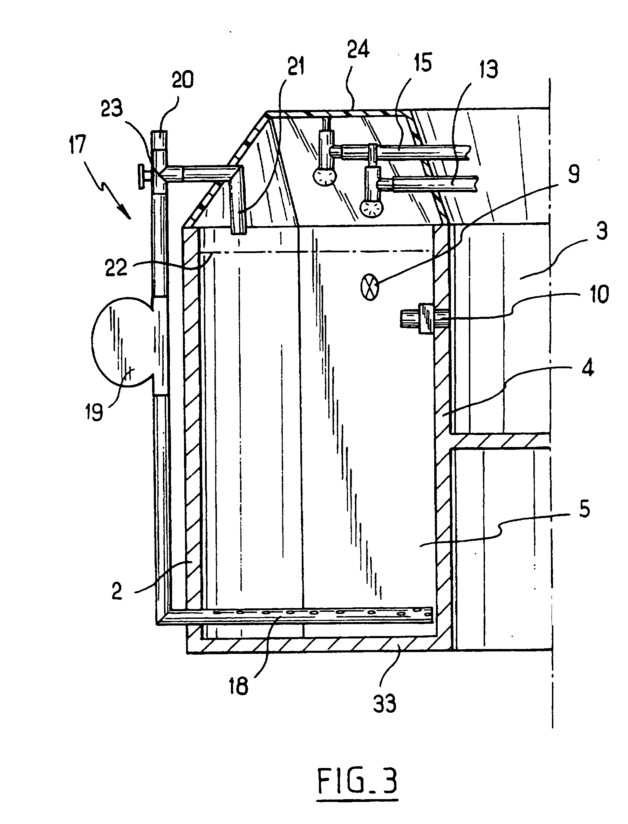

Chaque compartiment 6, 7, 8 comprend un dispositif d'injection de gaz généralement désigné en 17 (voir figure 3). Le dispositif d'injection comprend une rampe d'injection 18 s'étendant au fond du compartiment concerné et relié par l'intermédiaire d'un surpresseur 19 à une conduite de prélèvement d'air 20 s'étendant à l'extérieur du compartiment et à une conduite de prélèvement de gaz 21 débouchant juste au-dessus d'une ligne d'eau 22 représentant le niveau maximal d'effluents contenus dans le compartiment. Les conduites de prélèvement 20 et 21 sont raccordés au surpresseur 19 par l'intermédiaire d'une vanne 23 pour sélectivement connecter le surpresseur 19 à la conduite de prélèvement 20 ou à la conduite de prélèvement 21. Les compartiments peuvent également comprendre un système d'aération de surface et/ou un agitateur mécanique.

Chaque compartiment comprend ici un toit 24 sous lequel débouche la conduite de prélèvement 21. Le toit peut être réalisé en matériau rigide ou sous forme d'une bâche et être monté de façon amovible.

L'installation comprend en outre un décanteur 11. Le décanteur 11 est relié au dégazeur 3 par une canalisation 12 formant avec les vannes 10 un circuit d'évacuation des effluents traités vers le décanteur, et aux compartiments 6, 7, 8 par une canalisation 13 débouchant dans chacun de ces compartiments par l'intermédiaire d'une vanne 14 pour former un circuit d'alimentation des compartiments en boues activées.

Une canalisation 15 débouchant dans chaque compartiment 6, 7, 8 par des vannes 16 relie ces compartiments à un ensemble non représenté de stockage et de prétraitement des effluents.

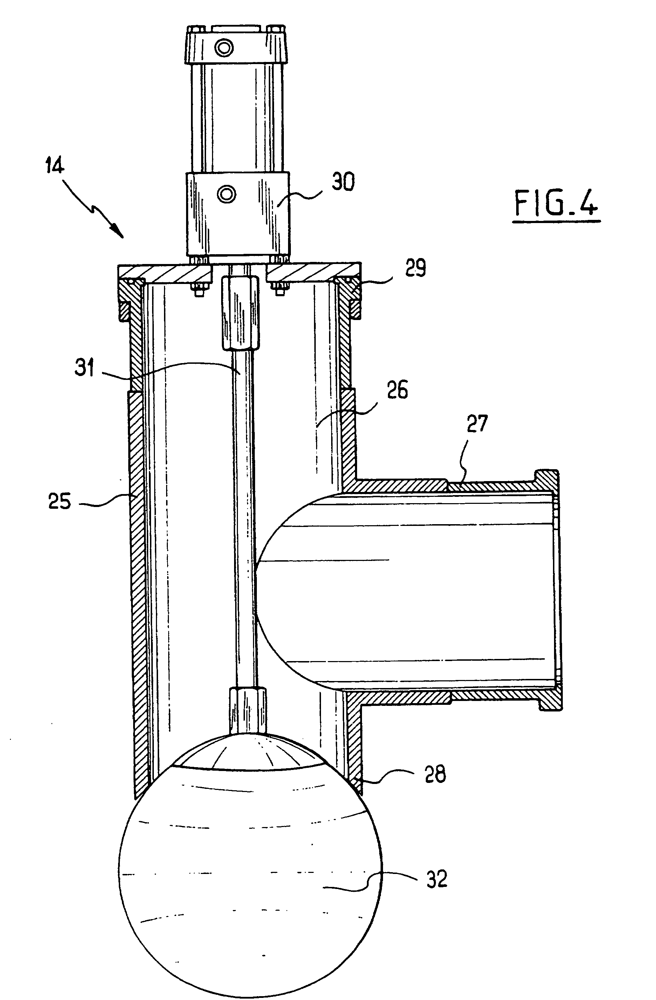

La structure des vannes 16 est identique à la structure des vannes 14 qui est représentée à la figure 4.

Les vannes 14 comprennent un corps tubulaire 25 délimitant un canal interne 26 de section transversale circulaire raccordée à la canalisation 13 par une conduite de raccordement 27 s'étendant transversalement par rapport au corps tubulaire 25. Le corps tubulaire 25 a une extrémité ouverte 28 délimitant un orifice d'écoulement et une extrémité opposée fermée 29 supportant un vérin de commande 30 ayant une tige 31 qui s'étend dans le canal interne 26. L'extrémité libre de la tige supporte un corps sphérique 32 saillant à l'extérieur du corps tubulaire 25. Le corps sphérique 32 est réalisé par exemple en élastomère et a un diamètre supérieur au diamètre de l'orifice d'écoulement délimité par l'extrémité 28 du corps tubulaire 25. Les mouvements de sortie et de rétraction de la tige 31 amènent le corps sphérique 32 dans deux positions extrêmes : une position d'ouverture dans laquelle le corps sphérique 32 est écarté de l'extrémité 28 pour dégager l'orifice d'écoulement et une position de fermeture (représentée à la figure 4) dans laquelle le corps sphérique 32 est appliqué contre l'extrémité 28 pour obturer l'orifice d'écoulement de la vanne 14.

La structure de cette vanne est avantageuse car ainsi réalisé la vanne assure une obturation correcte du conduit sur lequel elle est montée même si des matières fibreuses viennent se coincer entre le bord de l'extrémité 28 et le corps sphérique formant l'élément d'obturation. L'élément d'obturation pourrait également être hémisphérique ou de forme oblongue convexe. L'élément d'obturation sera alors disposé de façon que la surface convexe s'étende en regard de l'extrémité 28. Le corps tubulaire 25 est de préférence monté pour pivoter autour de l'angle de la conduite de raccordement 27. Il est ainsi possible d'accéder aisément au corps sphérique 32, par exemple pour procéder à son nettoyage.

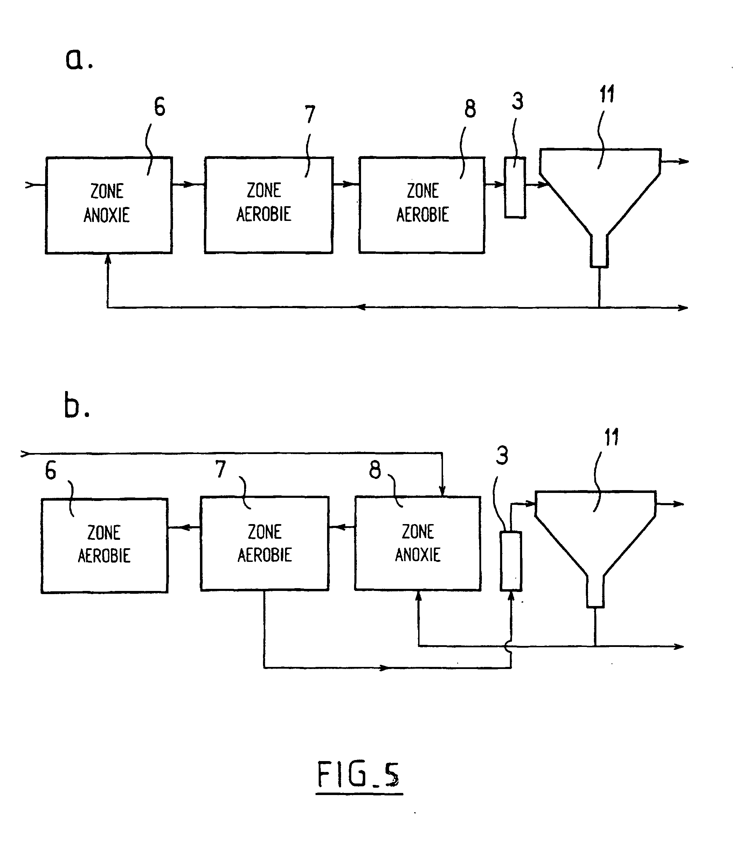

La mise en oeuvre du procédé selon l'invention va maintenant être décrite en référence à la figure 5.

Dans une première phase représentée à la figure 5a, l'installation est commandée de manière que le compartiment 6 fonctionne en anoxie et que les compartiments 7 et 8 fonctionnent en aérobie. A cet effet, la vanne 23 du dispositif d'injection de gaz du compartiment 6 est commandée pour prélever des gaz par la conduite 21 juste au-dessus de la ligne d'eau 22 afin d'injecter ces gaz par la rampe 18 au fond du compartiment 6, et les vannes 23 des dispositifs d'injection de gaz 17 des compartiments 7 et 8 sont commandées pour prélever l'air extérieur par la conduite 20 afin d'injecter celui-ci au fond de ces compartiments et former un dispositif d'aération.

Parallèlement, les vannes 9 sont commandées pour mettre en communication d'une part les compartiments 6 et 7 et d'autre part les compartiments 7 et 8 tandis que les vannes 10 sont commandées de manière que seul le compartiment 8 soit relié au dégazeur 3.

Les effluents à traiter et des boues activées sont amenés par les canalisations 15 et 13 dans le compartiment 6 où ils sont délivrés par l'intermédiaire des vannes 14 et 16 correspondantes. Les bactéries des boues activées reçues dans le compartiment 6 absorbent alors le carbone des effluents en consommant l'oxygène des nitrates contenus dans les boues. Ceci provoque une dégradation des nitrates. L'azote de ceux-ci se dégage alors sous forme gazeuse et remonte à la surface des effluents où une partie de celui-ci est capté par la conduite 21 pour être injecté au fond du compartiment 6. Un brassage des effluents et des boues est ainsi réalisé. On évite de la sorte de recourir à un agitateur mécanique dont la maintenance est relativement onéreuse.

Lors de l'introduction des effluents à traiter et des boues activées dans le compartiment 6, une partie des effluents traités dans le compartiment 6 passe dans le compartiment 7 par l'intermédiaire de la vanne 9 correspondante, une partie des effluents traités dans le compartiment 7 passe dans le compartiment 8 par l'intermédiaire de la vanne 9 correspondante, une partie des effluents traités dans le compartiment 8 passe dans le dégazeur 3 par l'intermédiaire de la vanne 10 correspondante et une partie des effluents contenus dans le dégazeur 3 passe dans le décanteur 11 par la canalisation 12. Ce mouvement en cascade se poursuit tant que des effluents à traiter sont déversés dans le compartiment 6 en raison des pertes de charge dans les vannes.

Dans les compartiments 7 et 8, l'absorption du carbone se termine et des nitrates sont reformés dans les boues activées par l'action des bactéries spécialisées utilisant l'oxygène de l'air injecté par le dispositif 17 au fond de ces compartiments.

A la sortie du décanteur 11 des effluents traités, ne comprenant plus de carbone ni d'azote, et des boues activées sont récupérés par l'intermédiaire de dispositifs d'évacuation non représentés. Une partie des boues activées récupérées est ramenée par la canalisation 13 au compartiment 6 pour renouveler les boues activées de ce compartiment. On notera que les boues activées contenues dans le décanteur vont tendre vers l'anoxie de sorte qu'elles ne perturbent pas le fonctionnement en anoxie du compartiment dans lequel elles sont introduites.

Dans une deuxième phase (voir la figure 5b), le fonctionnement en aérobie du compartiment 8 est interrompu pour permettre le dégazage puis le compartiment 8 est commandé pour fonctionner en anoxie tandis que les compartiments 6 et 7 sont commandés pour fonctionner en aérobie. Des effluents à traiter et des boues activées sont alors amenés dans le compartiment 8 par les canalisations 15 et 13, et les vannes 9 et 10 sont commandées pour définir un circuit des effluents amenant ceux-ci du compartiment 8 vers le compartiment 7, puis au compartiment 6, au dégazeur 3 et enfin au décanteur 11.

La séquence d'alimentation consiste donc à inverser les modes de fonctionnement des compartiments 6 et 8, tandis que le mode de fonctionnement du compartiment 7 reste toujours identique.

Le passage d'une phase à une autre est de préférence commandé de façon automatique par l'intermédiaire de capteurs oxydoréduction de type connu. Le système étant entièrement automatisé, il sera contrôlé et piloté à distance par l'intermédiaire de tout moyen de télégestion. Il peut également être commandé manuellement en pilotant des phases d'une durée de l'ordre d'une heure.

Bien entendu, l'invention n'est pas limitée au mode de réalisation qui vient d'être décrit, mais englobe au contraire toute variante reprenant, avec des moyens équivalents, ses caractéristiques essentielles.

Ainsi, bien que l'installation ait été décrite comme comprenant une cuve unique divisée en trois compartiments et un dégazeur, l'installation pourrait comprendre trois cuves et un dégazeur séparés, ou pourrait comprendre une cuve cloisonnée en un nombre différent de compartiments (mais au moins égal à trois).

En outre, le circuit d'alimentation en effluents et le circuit d'alimentation en boues activées pourront ne desservir que les compartiments 6 et 8. Le compartiment 7 pourra dans ce cas être associé à un dispositif d'injection de gaz ne permettant que le fonctionnement en aérobie. Une installation comprenant une alimentation identique en effluents et en gaz pour les trois compartiments présente toutefois l'avantage de permettre un fonctionnement en mode dégradé dans lequel deux compartiments seulement sont en service et fonctionnent alternativement an anoxie et en aérobie, ce qui permet une intervention sur le troisième compartiment pour un entretien ou une réparation.

## Revendications

1. Procédé de traitement d'effluents par brassage avec des boues activées, au moyen d'une installation comprenant trois zones de traitement (6,7,8), une zone recevant les effluents à traiter et commandée pour fonctionner en anoxie, une zone reliée à la zone en anoxie et commandée pour fonctionner en première zone aérobie, et une zone reliée à la première zone aérobie et à un décanteur (11) et commandée pour fonctionner en seconde zone en aérobie, le procédé comprenant les étapes d'alimenter séquentiellement une zone de traitement (6,8) avec des effluents à traiter et des boues activées, la zone recevant les effluents étant commandée pour fonctionner en anoxie, **caractérisé en ce que** l'alimentation séquentielle est réalisée de manière que la zone préalablement en anoxie devienne la seconde zone en aérobie tandis que la première zone en aérobie reste commandée pour fonctionner en première zone en aérobie.

2. Procédé de traitement selon la revendication 1, **caractérisé en ce que** la zone destinée à être alimentée avec les effluents à traiter est laissée en repos pendant une durée permettant un dégazage des effluents qu'elle contient avant d'être alimentée.

3. Procédé de traitement selon la revendication 1 ou la revendication 2, **caractérisé en ce qu'**il comporte une étape de dégazage préalablement à l'envoi dans le décanteur.

4. Procédé de traitement selon la revendication 3, **caractérisé en ce que** dans les zones fonctionnant en aérobie une injection de gaz est réalisée en prélevant du gaz juste au-dessus de la ligne d'eau de la zone correspondante.

5. Procédé de traitement selon la revendication 4, **caractérisé en ce que** pendant l'injection de gaz la zone correspondante est recouverte d'un toit (24).

## Patentansprüche

1. Verfahren zur Behandlung von Abwässern durch Vermischung mit Belebtschlamm mit Hilfe einer Anlage, die drei Behandlungszonen (6, 7, 8) umfasst, eine Zone, welche die zu behandelnden Abwässer aufnimmt und derart gesteuert wird, dass sie unter Anoxie arbeitet, eine Zone, die mit der unter Anoxie arbeitenden Zone verbunden ist und derart gesteuert wird, dass sie als erste aerobe Zone arbeitet, und eine Zone, die mit der ersten aeroben Zone und mit einem Dekanter (11) verbunden ist und derart gesteuert wird, dass sie als zweite aerobe Zone arbeitet, wobei das Verfahren die Schritte des sequentiellen Speisens einer Behandlungszone (6, 8) mit zu behandelnden Abwässern und Belebtschlamm umfasst, wobei die Zone, welche die Abwässer aufnimmt, derart gesteuert wird, dass sie unter Anoxie arbeitet, **dadurch gekennzeichnet, dass** die sequentielle Speisung auf eine Weise durchgeführt wird, dass die zuvor unter Anoxie arbeitende Zone zur zweiten aeroben Zone wird, während die erste aerobe Zone weiterhin derart gesteuert wird, dass sie als erste aerobe Zone arbeitet.

2. Verfahren zur Behandlung nach Anspruch 1, **dadurch gekennzeichnet, dass** die Zone, die mit den zu behandelnden Abwässern gespeist werden soll, über eine Zeitdauer im Ruhezustand belassen wird, die eine Entgasung der Abwässer ermöglicht, die sie vor ihrer Speisung enthält.

3. Verfahren zur Behandlung nach Anspruch 1 oder Anspruch 2, **dadurch gekennzeichnet, dass** es vor der Weiterleitung in den Dekanter einen Entgasungsschritt einschließt.

4. Verfahren zur Behandlung nach Anspruch 3, **dadurch gekennzeichnet, dass** in den Zonen, die aerob arbeiten, eine Gaseinspritzung erfolgt, indem Gas direkt über der Wasserlinie der entsprechenden Zone entnommen wird.

5. Verfahren zur Behandlung nach Anspruch 4, **dadurch gekennzeichnet, dass** während der Gaseinspritzung die entsprechende Zone mit einem Dach (24) bedeckt ist.

## Claims

1. A method of treating effluent by stirring with activated sludge, by means of an installation having three treatment zones (6, 7, 8): one zone receiving the effluent for treatment and controlled to operate in anoxia; one zone connected to the anoxic zone and controlled to operate as a first aerobic zone; and one zone connected to the first aerobic zone and to a settling tank (11) and controlled to operate as a second aerobic zone; the method comprising the steps of sequentially feeding respective treatment zones (6, 8) with effluent for treatment and with activated sludge, the zone receiving the effluent being controlled to operate in anoxia, the method being **characterized in that** sequential feeding is performed so that the zone that was previously in anoxia becomes the second aerobic zone while the first aerobic zone remains controlled to operate as the first aerobic zone.

2. A treatment method according to claim 1, **characterized in that** the zone to be fed with the effluent for treatment is allowed to rest for a duration that enables the effluent it contains to degas prior to being fed.

3. A treatment method according to claim 1 or claim 2, **characterized in that** it includes a degassing step prior to delivery into the settling tank.

4. A treatment method according to claim 3, **characterized in that** in the zones operating aerobically, gas is injected by taking gas from immediately above the water line of the corresponding zone.

5. A treatment method according to claim 4, **characterized in that**, while gas is being injected, the corresponding zone is covered by a roof (24).
